(19) Europäisches Patentamt
European Patent Office
Office européen des brevets

(11) EP 2 586 800 A1

(12) EUROPEAN PATENT APPLICATION

(43) Date of publication:
**01.05.2013 Bulletin 2013/18**

(21) Application number: **11187153.9**

(22) Date of filing: **28.10.2011**

(51) Int Cl.:
***C08F 6/04*** *(2006.01)* ***C08F 6/28*** *(2006.01)*
*C08L 27/12* *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Solvay Specialty Polymers Italy S.p.A.**
**20021 Bollate (MI) (IT)**

(72) Inventors:
- **Oldani, Claudio**
  **20014 Nerviano (MI) (IT)**
- **Pagano, Elvira**
  **20144 Milano (IT)**
- **Valsecchi, Roberto**
  **24040 Osio Sopra (BG) (IT)**
- **Merlo, Luca**
  **22030 Montorfano (IT)**

(74) Representative: **Benvenuti, Federica et al**
**SOLVAY SA**
**Intellectual Assets Management**
**Rue de Ransbeek, 310**
**1120 Bruxelles (BE)**

# (54) Process for the treatment of sulfonyl fluoride polymers with supercritical carbon dioxide

(57) A process for reducing the amount of soluble polymeric fractions in a sulfonyl fluoride polymer. The process comprises contacting a sulfonyl fluoride polymer with supercritical carbon dioxide followed by separation of the polymer from the fluid. The sulfonyl fluoride polymers so obtained are particularly suitable for the preparation of ionomeric membranes for use in electrochemical devices.

EP 2 586 800 A1

## Description

### Technical Field

The invention relates to a process for the treatment of fluorinated polymers containing sulfonyl fluoride functional groups suitable to reduce the content of the soluble polymeric fractions.

### Background Art

Fluorinated polymers containing sulfonyl fluoride functional groups are known in the prior art as precursors for a class of ion exchange fluorinated polymers generally referred to as "ionomers".

Due to their ionic properties, fluorinated ionomers are suitable in the manufacture of electrolyte membranes for electrochemical devices such as fuel cells, electrolysis cells, lithium batteries.

Fuel cells are electrochemical devices that produce electricity by catalytically oxidizing a fuel, such as hydrogen or methanol. Among known fuel cells of particular interest are proton exchange membrane (PEM) fuel cells which employ hydrogen as the fuel and oxygen or air as the oxidant. In a typical PEM fuel cell, hydrogen is introduced into the anode portion, where hydrogen reacts and separates into protons and electrons. The membrane transports the protons to the cathode portion, while allowing a current of electrons to flow through an external circuit to the cathode portion to provide power. Oxygen is introduced into the cathode portion and reacts with the protons and electrons to form water and heat.

An important requirement for the long-term functioning of a PEM fuel cell is the ability of the membrane to maintain suitable water content in the membrane itself to ensure the required level of ion conductivity. It is important that, while in operation, the membrane maintains a high proton transport capability and efficiently transfers water generated during the cell operation from one side of the membrane to the other.

Ionomers deriving from fluorinated polymers containing sulfonyl fluoride functional groups have shown to possess advantageous properties in terms of both proton and water transport capability. In general, the higher the amount of monomeric units comprising sulfonyl fluoride functional groups contained in the polymer, the higher the ionic conductivity of the membranes obtained therefrom.

Polymers containing high amounts of monomeric units comprising sulfonyl fluoride functional groups however have the drawback that when transformed into ionomeric membranes and used in e.g. a fuel cell they tend to progressively lose weight during the lifetime of the cell. Without being bound by theory the loss of weight is believed to be due to the progressive dissolution of the polymeric fractions containing the high amounts of monomeric units comprising sulfonyl fluoride functional groups.

It would therefore be desirable to have sulfonyl fluoride polymers having a lower content of soluble polymeric fractions and thus having an increased durability when transformed into an ion conducting membrane for a fuel cell application.

### Summary of the invention

The Applicant has now developed a process for the treatment of sulfonyl fluoride polymers that allows obtaining such an objective, said process comprising the treatment of sulfonyl fluoride polymers with supercritical fluids.

The use of supercritical fluids, in particular supercritical carbon dioxide, as effective extraction solvents has been extensively described in the literature. Supercritical carbon dioxide has been employed since 1990 in the production of decaffeinated coffee as well as for isolating natural flavours in foods. The term "supercritical" is commonly employed to refer to that physical state wherein the density of the vapour becomes as high as that of the liquid, a state typically attained by heating a substance at a temperature exceeding the boiling temperature and at a sufficiently high pressure. The temperature and pressure conditions to obtain a supercritical fluid are dependent on the nature of the substance. In the case of carbon dioxide these conditions are a temperature of at least 31.1°C and a pressure of at least 7.38 MPa. In the case of water the critical temperature and pressure are 374°C and 22 MPa, respectively.

US 20080064771 A (KOEHLER J.) 13.03.2008 discloses a process for recycling fuel cell components comprising both fluorine-containing polymers and precious metals wherein the metals are separated from the fluorine-containing polymers by treatment with a supercritical fluid. In particular, this document discloses the use of supercritical water. The fluorine-containing polymers are typically the ionomers in the proton exchange membrane as well as in the electrode layers.

SU, LIJUN, et al. Perfluorosulfonic acid membranes treated by supercritical carbon dioxide method for direct methanol fuel cell application . J. Membrane Science. 2009, no.335, p.118-125. discloses the treatment of perfluorosulfonic acid membranes with supercritical carbon dioxide to modify the crystalline structure of the polymeric membrane.

None of the documents above disclose a process for treating a sulfonyl fluoride polymer, that is a polymer having sulfonyl fluoride groups in neutral, non-acid form.

The Applicant has surprisingly found that the inventive treatment is effective in reducing the amount of soluble polymeric fractions in sulfonyl fluoride polymers. Membranes obtained from sulfonyl fluoride polymers after the inventive treatment are characterised by increased durability under typical fuel cell operating conditions.

**Definitions**

The term "fluorinated" is used herein to refer to compounds (e.g. monomers, polymers etc.) that are either totally or partially fluorinated, i.e wherein all or only a part of the hydrogen atoms have been replaced by fluorine atoms.

The expression "sulfonyl fluoride polymer" is used herein to refer to a fluorinated polymer comprising of recurring units of at least one ethylenically unsaturated fluorinated monomer containing at least one sulfonyl fluoride group ($-SO_2F$) (monomer (A) as hereinafter defined) and at least one ethylenically unsaturated fluorinated monomer (monomer (B) as hereinafter defined).

For the purpose of the present invention the expression "soluble polymeric fractions" is intended to denote polymeric fractions having an average content of monomeric units comprising at least one sulfonyl fluoride group greater than 25 mole %. The average content of monomeric units comprising at least one sulfonyl fluoride group in the soluble polymeric fractions is typically greater than 26 mole%, even greater than 26.5 mole% and even greater than 27 mole%.

The expression "average content of monomeric units comprising at least one sulfonyl fluoride group" is used herein to indicate the average content of units derived from the at least one monomer (A) in the sulfonyl fluoride polymer or in a polymeric fraction of the sulfonyl fluoride polymer. The average content of monomeric units comprising at least one sulfonyl fluoride functional group may determined for instance by means of $^{19}F$ N MR spectroscopy or of IR spectroscopy.

The term "ionomer" is used in the present application to refer to a fluorinated polymer comprising recurring units derived from at least one ethylenically unsaturated fluorinated monomer comprising at least one ion exchange group $-SO_3^-$ and at least one ethylenically unsaturated fluorinated monomer (monomer (B) as hereinafter defined).

The expressions "acid form" and/or "salified form" of a sulfonyl fluoride polymer are meant to indicate that substantially all the ion exchange groups in the polymer are protonated and/or neutralized.

DETAILED DESCRIPTION OF THE INVENTION

Object of the present invention is a process for reducing the content of soluble polymeric fractions in a sulfonyl fluoride polymer.

Accordingly, object of the present invention is a process for reducing the content of soluble polymeric fractions in a sulfonyl fluoride polymer, said process comprising the steps of contacting said sulfonyl fluoride polymer with supercritical carbon dioxide; and separating said polymer from said supercritical carbon dioxide.

Supercritical carbon dioxide has been found to be effective in dissolving sulfonyl fluoride polymeric fractions having an average content of monomeric units comprising at least one sulfonyl fluoride functional group greater than 25 mole %. Accordingly, said polymeric fractions can be efficiently removed from a sulfonyl fluoride polymer with the inventive process. The Applicant has found that reducing the content of said polymeric fractions does not negatively impact the proton and water transport capabilities of the ionomers derived from sulfonyl fluoride polymers but at the same time reduces the loss of weight when membranes made of said ionomers are used in fuel cells.

According to the present specification a sulfonyl fluoride polymer comprises recurring units derived from at least one ethylenically unsaturated fluorinated monomer (A) containing at least one sulfonyl fluoride functional group and at least one ethylenically unsaturated fluorinated monomer (B). The sulfonyl fluoride polymer suitable for the inventive process may comprise up to 22 mole% of recurring units derived from at least one ethylenically unsaturated fluorinated monomer (A). Typically, the sulfonyl fluoride polymer comprises at least 0.1 mole%, at least 1 mole %, and even at least 5 mole% of recurring units derived from at least one ethylenically unsaturated fluorinated monomer (A). Good results in terms of proton and water transport properties of the resulting ionomer membranes are generally obtained when the sulfonyl fluoride polymer comprises from 10 to 22 mole%, preferably from 12 to 22 mole% of recurring units derived from at least one ethylenically unsaturated fluorinated monomer (A).

The phrase "at least one monomer" is used herein with reference to monomers of both type (A) and (B) to indicate that one or more than one monomer of each type can be present in the polymer. Hereinafter the term monomer will be used to refer to one or more than one monomer of a given type.

Non limiting examples of suitable monomers (A) are:

- sulfonyl fluoride fluoroolefins of formula: $CF_2=CF(CF_2)_nSO_2F$ wherein n is an integer between 0 and 10, preferably between 1 and 6, more preferably n is equal to 2 or 3;
- sulfonyl fluoride fluorovinylethers of formula: $CF_2=CF-O-(CF_2)_mSO_2F$ wherein m is an integer between 1 and 10, preferably between 1 and 6, more preferably between 2 and 4, even more preferably m equals 2;
- sulfonyl fluoride fluoroalkoxyvinylethers of formula:

$$CF_2=CF-(OCF_2CF(R_{F1}))_x-O-CF_2(CF(R_{F2}))_ySO_2F$$

wherein x is an integer between 0 and 2, $R_{F1}$ and $R_{F2}$, equal or different from each other, are independently -F, -Cl or a $C_1$-$C_{10}$ perfluoroalkyl group, optionally substituted with one or more ether oxygen, y is an integer between 0 and 6; preferably x is 1, $R_{F1}$ is $-CF_3$, y is 1 and $R_{F2}$ is -F;

- sulfonyl fluoride aromatic fluoroolefins of formula $CF_2=CF-Ar-SO_2F$ wherein Ar is a $C_5$-$C_{15}$ aromatic or heteroaromatic substituent.

Preferably monomer (A) is selected from the group of the sulfonyl fluoride perfluorovinylethers of formula $CF_2=CF-O-(CF_2)_m-SO_2F$, wherein m is an integer between 1 and 6, preferably between 2 and 4.

More preferably monomer (A) is $CF_2=CFOCF_2CF_2-SO_2F$ (perfluoro-5-sulfonylfluoride-3-oxa-1-pentene).

Non limiting examples of suitable ethylenically unsaturated fluorinated monomers of type (B) are:

- $C_2$-$C_8$ fluoroolefins, such as tetrafluoroethylene (TFE), pentafluoropropylene, hexafluoropropylene (HFP), and hexafluoroisobutylene;
- vinylidene fluoride (VDF);
- $C_2$-$C_8$ chloro- and/or bromo- and/or iodo-fluoroolefins, such as chlorotrifluoroethylene (CTFE) and bromotrifluoroethylene;
- fluoroalkylvinylethers of formula $CF_2=CFOR_{f1}$, wherein $R_{f1}$ is a $C_1$-$C_6$ fluoroalkyl, e.g. $-CF_3$, $-C_2F_5$, $-C_3F_7$;
- fluoro-oxyalkylvinylethers of formula $CF_2=CFOX_O$, wherein $X_O$ is a $C_1$ -$C_{12}$ perfluoro-oxyalkyl having one or more ether groups, for example perfluoro-2-propoxy-propyl;
- fluoroalkyl-methoxy-vinylethers of formula $CF_2=CFOCF_2OR_{f2}$ in which $R_{f2}$ is a $C_1$-$C_6$ fluoro- or perfluoroalkyl, e.g. $-CF_3$, $-C_2F_5$, $-C_3F_7$ or a $C_1$ -$C_6$ fluorooxyalkyl having one or more ether groups, like $-C_2F_5-O-CF_3$;
- fluorodioxoles, of formula:

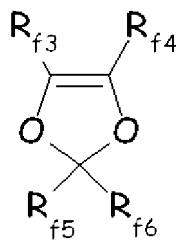

wherein each of $R_{f3}$, $R_{f4}$, $R_{f5}$, $R_{f6}$, equal or different each other, is independently a fluorine atom, a $C_1$-$C_6$ fluoro- or per(halo)fluoroalkyl, optionally comprising one or more oxygen atom, e.g. $-CF_3$, $-C_2F_5$, $-C_3F_7$, $-OCF_3$, $-OCF_2CF_2OCF_3$.

Preferably monomer (B) is selected among:

- $C_3$-$C_8$ perfluoroolefins, preferably tetrafluoroethylene (TFE) and/or hexafluoropropylene (HFP);
- chloro- and/or bromo- and/or iodo-$C_2$-$C_6$ fluoroolefins, like chlorotrifluoroethylene (CTFE) and/or bromotrifluoroethylene;
- perfluoroalkylvinylethers of formula $CF_2=CFOR_{f1}$ in which $R_{f1}$ is a $C_1$-$C_6$ perfluoroalkyl, e.g. $-CF_3$, $-C_2F_5$, $-C_3F_7$;
- perfluoro-oxyalkylvinylethers of formula $CF_2=CFOX_O$, in which $X_O$ is a $C_1$-$C_{12}$ perfluorooxyalkyl having one or more ether groups, like perfluoro-2-propoxy-propyl.

More preferably monomer (B) is selected from TFE and CTFE. Even more preferably monomer (B) is TFE.

Optionally, in addition to monomers (A) and (B) the sulfonyl fluoride polymer may comprise recurring units derived from bis-olefins. Non limiting examples of suitable bis-olefins are selected from those of formulae below:

- $R_1R_2C=CH-(CF_2)_j-CH=CR_3R_4$ wherein j is an integer between 2 and 10, preferably between 4 and 8, and $R_1$, $R_2$, $R_3$, $R_4$, equal or different from each other, are -H, -F or $C_1$-$C_5$ alkyl or (per)fluoroalkyl group;
- $A_2C=CB-O-E-O-CB=CA_2$ ,wherein each of A, equal or different from each other, is independently selected from -F, -Cl, and -H; each of B, equal or different from each other is independently selected from -F, -Cl, -H and $-OR_B$, wherein $R_B$ is a branched or straight chain alkyl radical which can be partially, substantially or completely fluorinated or chlorinated; E is a divalent group having 2 to 10 carbon atoms, optionally fluorinated, which may be inserted with ether linkages; preferably E is a $-(CF_2)_z-$ group, with z being an integer from 3 to 5;

- $R_6R_7C=CR_5$-E-O-CB=$CA_2$, wherein E, A and B have the same meaning as above defined; $R_5$, $R_6$, $R_7$, equal or different from each other, are -H, -F or $C_1$-$C_5$ alkyl or fluoroalkyl group.

When a bis-olefin is employed in the polymerization process of the invention the resulting polymer typically comprises from 0.01 % to 5% by moles of units deriving from the bis-olefin with respect to the total amount of units in the polymer.

Typically, the sulfonyl fluoride polymer is free of recurring units derived from bis-olefins as defined above.

Preferably, the sulfonyl fluoride polymer consists of recurring units derived from at least one ethylenically unsaturated fluorinated monomer (A) containing at least one sulfonyl fluoride functional group and at least one ethylenically unsaturated fluorinated monomer (B).

More preferably, the sulfonyl fluoride polymer consists of recurring units derived from TFE and $CF_2$=$CFOCF_2CF_2$-$SO_2F$. Even more preferably the sulfonyl fluoride polymer consists of 78 to 88 mole% of recurring units derived from TFE and 12 to 22 mole% of recurring units derived from $CF_2$ =$CFOCF_2CF_2$-$SO_2F$.

The sulfonyl fluoride polymer may be conveniently obtained by any polymerization process known in the art. Suitable processes for the preparation of the sulfonyl fluoride polymers are for instance those described in US 4,940,525, EP-A-1,167,400, EP-A-1,323,751, EP-A-1,172,382.

The sulfonyl fluoride polymer may be subjected to conventional polymer post-treatment procedures before or after being treated with supercritical carbon dioxide. For instance, the polymer may undergo a fluorination treatment to remove unstable chain-end groups as known in the art.

The treatment of the sulfonyl fluoride polymer with supercritical carbon dioxide is carried out on the polymer in solid form, for instance in granular, powder or pellet form. Suitable powders for the inventive process are those having a mean particle size of at least 1 $\mu$m. Granules and pellets of the sulfonyl fluoride polymer generally have a mean particle size of at least 1000 $\mu$m, typically of at least 1200 $\mu$m, even at least 1500 $\mu$m. The treatment may also be carried out on films or sheets made of, or comprising, the sulfonyl fluoride polymer. Preferably, the process is carried out on the polymer in pellet or granular form.

The process is carried out at temperatures and pressures that allow the formation of carbon dioxide in a supercritical state. Thus the process is carried out at a temperature of at least 31.1°C and at a pressure of at least 7.38 MPa. The process is more typically carried out at a temperature of at least 40°C and up to 100°C. In general the process is carried out at a temperature in the range from 50 to 90°C and at a pressure of at least 10 MPa, preferably at a pressure in the range from 10 and 70 MPa.

The contact time between the polymer and supercritical carbon dioxide is at least 1 minute, preferably at least 30 minutes, more preferably at least 1 hour. The contact time is typically in the order of from 1 to 100 hours, more typically from 2 to 60 hours and even from 5 to 50 hours.

Typically the ratio by weight of supercritical carbon dioxide with respect to the sulfonyl fluoride polymer to be treated is generally at least 2:1, preferably 3:1, more preferably 5:1 and even up to 10:1. Higher ratios could be used in the inventive process however they would not be practical.

The step of treating the polymer with supercritical carbon dioxide is typically carried out in a suitable pressurized vessel, such as an autoclave. Flow tube reactors may be employed to carry out the process in continuous.

At the end of the process the solid polymer is separated from supercritical carbon dioxide. The separation of the solid sulfonyl fluoride polymer from supercritical carbon dioxide can be performed in any conventional manner.

The soluble polymeric fractions dissolved in supercritical carbon dioxide, separated from the solid sulfonyl fluoride polymer, are recovered by reducing the pressure, and optionally the temperature, thereby promoting the transition of the supercritical carbon dioxide to the gas phase.

Thus, the sulfonyl polymer obtained after treatment with supercritical carbon dioxide contains less than 15% by weight of residual soluble polymeric fractions, preferably less than 10% by weight, more preferably less than 5% by weight, still more preferably less than 2% by weight, even more preferably less than 1 % by weight.

In an embodiment of the invention the sulfonyl fluoride polymer obtained from the process contains less than 10% by weight, preferably less than 5% by weight, more preferably less than 2% by weight and even more preferably less than 1 % by weight of soluble polymeric fractions having an average content of monomeric units comprising at least one sulfonyl fluoride group greater than 26 mole %.

In another embodiment of the invention the sulfonyl fluoride polymer obtained from the process contains less than 10% by weight, preferably less than 5% by weight, more preferably less than 2% by weight, still more preferably less than 1 % by weight of polymeric fractions having an average content of monomeric units comprising at least one sulfonyl fluoride group greater than 26.5 mole %.

In a further embodiment of the invention the sulfonyl fluoride polymer obtained from the process contains less than 10% by weight, preferably less than 5% by weight, more preferably less than 2% by weight, still more preferably less than 1 % by weight of polymeric fractions having an average content of monomeric units comprising at least one sulfonyl fluoride group greater than 27 mole %.

The Applicant has found that, when in use in a fuel cell, films or membranes obtained from the sulfonyl fluoride polymer as defined above in acid form, are provided with increased durability.

The Applicant has in fact observed that said membranes show a reduced loss of weight after treatment in water at 100°C when compared with membranes obtained from sulfonyl fluoride polymers which have not been treated according to the inventive process. Without being bound by theory the Applicant believes that the loss of weight in water at 100°C is directly related to the amount of polymeric fractions having an average content of monomeric units comprising a sulfonyl fluoride group greater than 25 mole % contained in the polymer or polymer composition.

The improvement, i.e. reduction, in the loss of weight of the membrane even after prolonged treatment in boiling water is particularly advantageous in view of the final use of the membrane, i.e. the use in fuel cells for automotive applications wherein expected life-span is in the order of the thousand hours.

In particular, membranes comprising the sulfonyl fluoride polymer obtained from the inventive process in acid form show a loss of weight of less than 5%, less than 3% and even less of 2% after treatment in water at 100°C for 96 hours.

The invention will be illustrated by means of the following non-limiting examples.

**EXAMPLES**

**Characterization**

**Molar content of monomeric units** was determined by $^{19}F$ NMR using a Varian Inova 400 NMR Spectrometer operating at 376.198 MHz for $^{19}F$. About 30 mg of polymer was loaded into a NMR 0.5 mm tube and dissolved in 0.5 mL of hexafluorobenzene.

In the case of copolymers of TFE and $CF_2$=$CFOCF_2CF_2$-$SO_2F$ the molar content of the monomeric units was determined on the basis of the following chemical shifts assignments (referred to the $C_6F_6$ solvent signal at -164.67 ppm): 45.2 ppm (-$SO_2\underline{F}$;) -77.5 ppm ($OC\underline{F}_2CF_2SO_2F$); -111.3 ppm (-$OCF_2C\underline{F}_2SO_2F$); -115/-122 ppm (-$C\underline{F}_2$-CF-($OCF_2CF_2SO_2F$)-, -$C\underline{F}_2$ $CF_2$)-); -132/-137 ppm (-$CF_2$-$C\underline{F}$-($OCF_2CF_2SO_2F$)-).

**Preparation of ionomer films and determination of their weight loss in water at 100°C**

Sulfonyl fluoride polymer pellets were compression molded in order to obtain 100-200 micron thick film, which was converted in the -$SO_3H$ form by hydrolysis in KOH (80°C for 8 hours) followed by acidification treatment in nitric acid and several washing steps in distilled water at room temperature. Two samples with a size of 25 x 50 mm approximately were obtained. The initial weight ($W_{in}$) was measured after drying at 105°C in a preheated vacuum oven until constant weight. Dried samples were put into a sealed vessel filled with 120 mL of distilled water and then placed into a heating oven at 100°C. After 96 hours heating was stopped. The samples were extracted from the vessel and dried to constant weight ($W_{fin96}$) in a vacuum oven at 105°C as described above.

The weight loss after 96 hours treatment in water at 100°C was calculated as follows:

$$weight_{LOSS-96} = -\frac{W_{fin96} - W_{in}}{W_{in}} \cdot 100$$

**EXAMPLE 1**

**SULFONYL FLUORIDE POLYMER PREPARATION**

In a 22 liter reactor, were introduced the following reactants: 3100 g of an aqueous solution containing 5 % by weight of a surfactant of formula $CF_2$ $ClO(CF_2CF(CF_3)O)p(CF_2O)qCF_2COOK$ (p/q = 10, average molecular weight 527 g/mol) and 95 % by weight of water; 9 L of deionized water; 756 mL of the monomer of formula $CF_2$=$CFOCF_2CF_2$-$SO_2F$.

The reactor, stirred at 470 rpm, was heated up to 50°C. The pressure inside the reactor was brought to 1 absolute MPa with a mixture of carbon dioxide and TFE. The partial pressure of TFE inside the reactor was 0.5 MPa. 300 mL of an aqueous solution having a concentration of 6 g/L of potassium persulphate were fed into the reactor causing an increase in the pressure. The reaction started immediately as indicated by the lowering of the pressure within the reactor to its initial value. The pressure was maintained constant by introducing TFE. During the polymerization, 160 mL of $CF_2$=$CFOCF_2CF_2$-$SO_2F$ were added every 200 g of TFE. The total mass of TFE fed into the reactor was 4000 g. The reaction was stopped after 234 min by venting TFE and successively lowering the reactor pressure. At the end of this operation, stirring was slowed down and the reactor brought to ambient pressure and temperature recovering a polymerization latex with a solid content of 33 % by weight.

The polymer latex was coagulated by freezing and thawing and the recovered polymer (P1) was washed with water and dried for 40 hours at 80°C. The obtained polymer had an average content of $CF_2$=$CFOCF_2$ $CF_2$-$SO_2F$ of 21.1 mole %.

3 kg of polymer P1 were dried and pelletized in a melt extruder. A film was obtained from P1 pellets, hydrolysed and tested for the determination of the weight loss in water at 100°C according to the procedure described above. The loss of weight after 96 hours was found to be 8.2 %.

**POLYMER TREATMENT**

The P1 pellets obtained as described above were introduced in an autoclave and treated with supercritical carbon dioxide at a temperature of 60°C and a pressure of 60 MPa for 6 hours (density of carbon dioxide = 0.97 g/cm$^3$). After 6 hours, the solid polymer ($P1_{treat}$) was separated from the supercritical fluid containing the soluble polymeric fractions.

($P1_{treat}$) had an average content of recurring units deriving from $CF_2$ =$CFOCF_2CF_2$-$SO_2F$ of 21.0 mole %.

A film was obtained from $P1_{treat}$ , hydrolysed and tested for the determination of the weight loss in water at 100°C according to the procedure described above. The loss of weight after 96 hours was found to be 1.6%.

The fluid recovered from the reactor was evaporated by reducing the pressure providing a sticky solid ($P1_{extr}$). The solid was analysed by $^{19}F$ NMR spectroscopy and identified as a TFE/$CF_2$=$CFOCF_2CF_2$-$SO_2F$ copolymer having an average content of recurring units deriving from $CF_2$ =$CFOCF_2CF_2$-$SO_2F$ of 34.5 mole %.

**Claims**

1. Process for reducing the content of soluble polymeric fractions in a sulfonyl fluoride polymer, said process comprising the steps of contacting said sulfonyl fluoride polymer with supercritical carbon dioxide; and separating said polymer from said supercritical carbon dioxide.

2. Process according to claim 1 wherein the sulfonyl fluoride polymer is contacted with supercritical carbon dioxide for at least 1 minute.

3. Process according to claim 1 or 2 wherein the sulfonyl fluoride polymer is contacted with supercritical carbon dioxide at a temperature from 40 to 90°C and at a pressure of from 10 to 70 MPa.

4. Process according to any one of the preceding claims wherein the sulfonyl fluoride polymer has an average content of monomeric units comprising at least one sulfonyl fluoride group of from 0.1 to 22 mol %.

5. Process according to any one of the preceding claims wherein the monomeric units comprising at least one sulfonyl fluoride group derive from at least one ethylenically unsaturated fluorinated monomer selected from the group consisting of: sulfonyl fluoride fluoroolefins of formula $CF_2$=$CF(CF_2)_nSO_2F$ wherein n is an integer between 0 and 10; sulfonyl fluoride fluorovinylethers of formula $CF_2$=CF-O-$(CF_2)_mSO_2F$ wherein m is an integer between 1 and 10; sulfonyl fluoride fluoroalkoxyvinylethers of formula $CF_2$=CF-$(OCF_2CF(R_{F1}))_x$ -O-$CF_2(CF(R_{F2}))_ySO_2F$ wherein x is an integer between 0 and 2, $R_{F1}$ and $R_{F2}$, equal or different from each other, are independently -F, -Cl or a $C_1$-$C_{10}$ perfluoroalkyl group, optionally substituted with one or more ether oxygens, y is an integer between 0 and 6; sulfonyl fluoride aromatic fluoroolefins of formula $CF_2$=CF-Ar-$SO_2F$ wherein Ar is a $C_5$-$C_{15}$ aromatic or heteroaromatic substituent.

6. Process according to any one of the preceding claims wherein the sulfonyl fluoride polymer consists of recurring units derived from $CF_2$=$CFOCF_2CF_2$-SO $_2$F and tetrafluoroethylene.

7. Use of supercritical carbon dioxide for reducing the solubility of sulfonyl fluoride polymers in water at 100°C.

Europäisches Patentamt
European Patent Office
Office européen des brevets

# EUROPEAN SEARCH REPORT

Application Number
EP 11 18 7153

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2008/064771 A1 (KOEHLER JOACHIM [DE] ET AL) 13 March 2008 (2008-03-13)<br>* claims 1,6 *<br>* table 1 *<br>----- | 1-7 | INV.<br>C08F6/04<br>C08F6/28<br><br>ADD.<br>C08L27/12 |
| X,D | SU, LIJUN ET AL.: "Perfluorosulfonic acid membranes treated by supercritical carbon dioxide method for direct methanol fuel cell application",<br>J. MEMBRANE SCIENCE,<br>2009, pages 118-125, XP002668438,<br>* abstract *<br>* Page 119, sections 2.1, 2.4 and Fig. 1 *<br>----- | 1-7 | |
| A | JP 2007 070570 A (NITTO DENKO CORP)<br>22 March 2007 (2007-03-22)<br>* abstract *<br>----- | 1 | |
| | | | TECHNICAL FIELDS SEARCHED (IPC) |
| | | | C08F<br>C08J<br>H01M |

The present search report has been drawn up for all claims

1

| Place of search | Date of completion of the search | Examiner |
|---|---|---|
| The Hague | 31 January 2012 | Niaounakis, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 11 18 7153

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2012

| Patent document cited in search report | Publication date | Patent family member(s) | Publication date |
|---|---|---|---|
| US 2008064771 A1 | 13-03-2008 | AT 445718 T | 15-10-2009 |
| | | DE 102004041997 A1 | 09-03-2006 |
| | | EP 1797208 A1 | 20-06-2007 |
| | | JP 2008511752 A | 17-04-2008 |
| | | US 2008064771 A1 | 13-03-2008 |
| | | WO 2006024507 A1 | 09-03-2006 |
| JP 2007070570 A | 22-03-2007 | JP 4499004 B2 | 07-07-2010 |
| | | JP 2007070570 A | 22-03-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20080064771 A, KOEHLER J.
- US 4940525 A
- EP 1167400 A
- EP 1323751 A
- EP 1172382 A


### Non-patent literature cited in the description


- **SU, LIJUN et al.** Perfluorosulfonic acid membranes treated by supercritical carbon dioxide method for direct methanol fuel cell application. *J. Membrane Science,* 2009, 118-125